Europäisches Patentamt

**European Patent Office**

**Office européen des brevets**

(19)

(11) Numéro de publication : **0 211 791 B1**

## FASCICULE DE BREVET EUROPEEN

(12)

(45) Date de publication du fascicule du brevet :
**12.06.91 Bulletin 91/24**

(51) Int. Cl.⁵ : **H04N 7/167**

(21) Numéro de dépôt : **86460013.5**

(22) Date de dépôt : **30.06.86**

(54) **Procédé d'embrouillage et de désembrouillage d'images de télévision.**

(30) Priorité : **02.07.85 FR 8510194**

(43) Date de publication de la demande :
**25.02.87 Bulletin 87/09**

(45) Mention de la délivrance du brevet :
**12.06.91 Bulletin 91/24**

(84) Etats contractants désignés :
**CH DE GB IT LI NL SE**

(56) Documents cités :
**WO-A-81/02499
FR-A- 2 320 676
FR-A- 2 543 386
INTERNATIONAL CONFERENCE ON SECURE
COMMUNICATION SYSTEMS, 22-23 février
1984, I.E.E. Conference Publication nr. 231,
1984, pages 59-65, IE, Londres, GB; N. LODGE
et al.: "Vision scrambling of C-MAC DBS
signals"**

(73) Titulaire : **ETAT FRANCAIS représenté par le
Ministre des PTT (Centre National d'Etudes
des Télécommunications)
38-40 rue du Général Leclerc
F-92131 Issy-les-Moulineaux (FR)**
Titulaire : **Etablissement Public de Diffusion
dit "Télédiffusion de France"
21-27 rue Barbès
F-92120 Montrouge (FR)**

(72) Inventeur : **Victorion, Christian
2, Allée du Bourg l'Evêque
F-35000 Rennes (FR)**
Inventeur : **Guionnet, Jacques
16, rue du Verger
F-35122 Vezin-Le-Coquet (FR)**

(74) Mandataire : **Le Guen, Louis François
CABINET Louis LE GUEN 38, rue Levavasseur
B.P. 91
F-35802 Dinard Cédex (FR)**

## Description

La présente invention concerne un procédé d'embrouillage et de désembrouillage appliqué à des images de télévision permettant leur transmission ou leur diffusion de façon confidentielle. A la source, les signaux constituant les images subissent une transformation telle que les images soient inintelligibles pendant la transmission ou à la diffusion. A la réception, seule la transformation inverse de la précédente permet de restituer l'image initiale.

On rappelle que, d'une manière générale, les émissions de télévision embrouillées sont destinées à des usagers qui sont munis de moyens de désembrouillage adéquats leur permettant d'obtenir sur l'écran de leur récepteur des images nettes, les images correspondantes affichées sur les écrans des récepteurs des autres usagers étant méconnaissables et difficiles, sinon pénibles, à regarder. Les signaux embrouillés peuvent être portés sur toute voie de transmission ou de diffusion dont ils respectent les normes en vigueur, que ce soit dans les réseaux terrestres de transmission ou de diffusion, les réseaux câblés ou les réseaux de transmission ou de diffusion par satellite. En pratique, un bon embrouillage est obtenu en combinant plusieurs types ou composantes d'embrouillage. Dans l'état de la technique, on connaît quatre composantes d'embrouillage.

Une première composante d'embrouillage fait intervenir des inversions de polarité de modulation. A ce sujet, on peut citer les procédés décrits dans les brevets FR-A-2 330 236, DE-A-1 907 580, FR-A-1 034 776, US-A-2 972 009 et DE-A-1 254 676.

Les trois autres composantes d'embrouillage font intervenir des décalages en position de l'information portée par une ligne d'image de télévision par rapport aux signaux de synchronisation. Ces décalages affectent soit la totalité de l'information de la ligne, provoquant un effet de retard simple, soit des portions de ligne.

Les effets de retard simple, constituant la deuxième composante d'embrouillage, rendent difficile, sinon pénible, la compréhension de l'émission, mais seuls ils n'assurent par une confidentialité absolue du message. Cela tient au fait que les normes de transmission et de diffusion d'images de télévision ne permettent pas de décalages importants entre l'information de synchronisation et l'information d'image, sans amputer cette dernière d'une longueur d'information égale au décalage maximal. Des effets de retard simple sont prévus dans les brevets FR-A-2 330 236, DE-A-1 907 580, US-A-2 510 046, US-A-2 619 530, DE-A-1 254 676. On peut également assimiler à cette composante, l'effet créé dans le brevet US-A-2 892 882, où l'on fait varier entre deux valeurs la largeur de l'impulsion de synchronisation ligne.

Dans la troisième composante d'embrouillage, des effets de décalage circulaire, mis en oeuvre dans les brevets FR-A-2 431 809 et FR-A-2 320 676, ou de décalages de plusieurs segments, mis en oeuvre dans le brevet WO-A-8 102 499, assurent une bonne confidentialité de message.

Dans la quatrième composante d'embrouillage, au moins une partie du signal est découpée en deux segments adjacents, le point de coupure étant défini d'une manière pseudo-aléatoire synchrone à l'émission et à la réception, et un ou les deux segment(s) est (sont) transmis retourné(s) sur place, pour être, à la réception, remis dans le sens initial. A la définition pseudo-aléatoire du point de coupure entre les segments, s'ajoute la sélection pseudo-aléatoire du ou des segments à retourner ou non. Un tel système d'embrouillage est décrit dans le document FR-A-2 543 386.

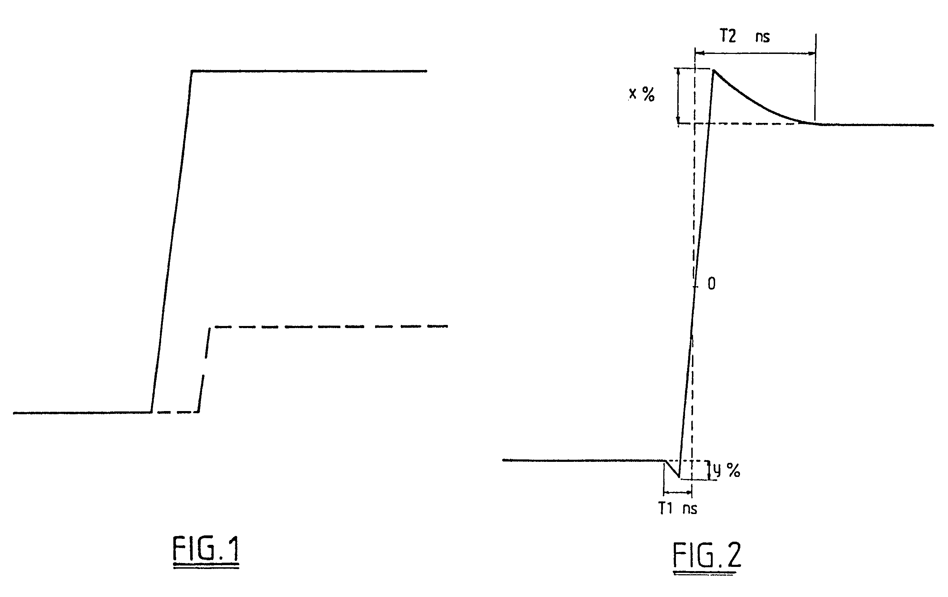

D'une manière générale, les signaux de télévision, qu'ils soient embrouillés ou non, peuvent subir au cours de leur transmission ou de leur diffusion des dégradations provoquées par des phénomènes d'écho ou par des phénomènes de traînage qui affectent toutes les transitions du signal. Les phénomènes d'écho et de traînage sur une transition sont respectivement schématisés dans les diagrammes des Figs. 1 et 2. A la Fig. 1, la transition du signal vidéo est montrée en trait plein et celle de l'écho en traits tirets. Un retard exprimé en ns affecte la transition de l'écho. En général, comme le montre la Fig. 2, la dégradation du signal est plus importante après la transition qu'avant. L'écho suit la transition et l'effet de traînage est plus important après la transition (durée T2, amplitude x%) qu'avant (durée T1 < T$_2$, amplitude y% < x%). Typiquement on peut avoir T1 = 75 ns, T2 = 350 ns, y = 5%, x = 15%.

Les procédés d'embrouillage des troisième et quatrième catégories, rappelés ci-dessus, introduisent un ou plusieurs points de coupure dans la partie utile du signal image et modifient la position relative des segments ou les retournent dans le temps. Ces manipulations du signal conduisent à introduire dans la ligne vidéo embrouillée des transitions artificielles qui correspondent aux points de coupure. Ces transitions artificielles sont affectées par les phénomènes d'écho et de traînage, au même titre que les transitions naturelles. Après désembrouillage, les défauts qui affectent les transitions artificielles peuvent avoir une amplitude et une extension temporelle suffisantes pour être visibles et gênantes. Sur l'image désembrouillée apparaissent, au niveau de points de coupure, des traînées plus ou moins longues. Dans tous les cas, les défauts correspondant aux transitions artificielles sont plus gênants que les défauts associés aux transitions naturelles du signal.

Une façon de se protéger des dégradations introduites aux points de coupure consiste à prévoir un certain recouvrement autour de ces derniers, mais la présence de cette redondance d'information contribue à diminuer la longueur de la ligne utile. Cela peut être acceptable avec des signaux de télévision composites, tels que des signaux SECAM, PAL ou NTSC, la diminution de la ligne étant peu importante. Avec des signaux codés en composantes comprimées dans le temps et multiplexées temporellement (système connu sous le nom de système MAC ou, en terminologie anglo-saxonne "Multiplexed Analogue Component Signal" et décrit notamment dans l'article intitulé "Système C-MAC/paquets pour la télévision directe par satellite" par H. Mertens et D. Wood, paru dans la Revue de l'UER – Technique N° 200 (août 1983), cette technique est impossible à mettre en oeuvre, car pour être efficace elle conduirait à une diminution trop importante de la ligne utile. En effet si on embrouille chaque composante séparément, il faut prévoir deux points de coupure (un par composante) et donc d'autant plus de points de recouvrement. La réduction de la ligne utile est encore amplifiée par la compression temporelle du signal.

Un objet de l'invention consiste à prévoir un ou des types d'embrouillage qui permettent de minimiser, sur l'image désembrouillée, les effets et les défauts dissymétriques illustrés aux Figs. 1 et 2.

Par ailleurs, un objet de l'invention consiste à prévoir un tel système d'embrouillage qui soit applicable non seulement au système à composantes séparées MAC, mais aussi aux normes de télévision à signal composite.

Un autre objet de l'invention consiste à prévoir un système n'impliquant pas de recouvrement. Cette dernière technique peut cependant être utilisée en combinaison avec la première pour en accroître l'efficacité dans des conditions particulièrement défavorables.

Le cas où la ligne (ou la composante de luminance, ou la composante de différence de couleur) est découpée en deux segments dont le second est retourné (procédé d'embrouillage de quatrième catégorie déjà décrit) répond à cette condition. Toutefois, l'utilisation de ce seul motif d'embrouillage ne serait pas suffisante pour assurer une bonne confidentialité. Il est nécessaire d'en prévoir au moins un second.

Suivant une caractéristique de l'invention, il est prévu un motif d'embrouillage dans lequel au moins une partie du signal utile est découpée en deux segments adjacents, le point de coupure entre les deux segments étant défini d'une manière pseudo-aléatoire synchrone à l'émission et à la réception, avec, à l'émission, le second segment retourné, puis permuté avec le premier.

Suivant une autre caractéristique, à la définition pseudo-aléatoire du point de coupure entre les segments, s'ajoute la sélection pseudo-aléatoire du motif d'embrouillage choisi : soit retournement sur place du second segment, soit retournement du second segment, puis permutation avec le premier segment.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels :

la Fig. 1 est un diagramme illustrant le phénomène d'écho sur une transition,

la Fig. 2 est un diagramme illustrant le phénomène de traînage sur une transition,

la Fig. 3 est le diagramme schématique de la partie utile d'une ligne ou d'une composante (luminance ou différence de couleur) d'un signal vidéo, avant embrouillage,

la Fig. 4 est le diagramme de la ligne ou de la composante de la Fig. 3 embrouillée par décalage circulaire de segments,

la Fig. 5 est le diagramme de la ligne ou de la composante de la Fig. 3 embrouillée par retournement sur place du premier segment,

la Fig. 6 est le diagramme de la ligne ou de la composante de la Fig. 3, embrouillée par retournement sur place des deux segments,

la Fig. 7 est le diagramme de la ligne ou de la composante de la Fig. 3 embrouillée par retournement du second segment,

la Fig. 8 est le diagramme de la ligne ou de la composante de la Fig. 3 embrouillée par retournement du second segment, puis permutation avec le premier segment,

La Fig. 9 est un bloc diagramme d'un dispositif d'embrouillage permettant d'obtenir les diagrammes des Figs. 7 et 8,

la Fig. 10 est un diagramme illustrant le fonctionnement du dispositif de la Fig. 9.

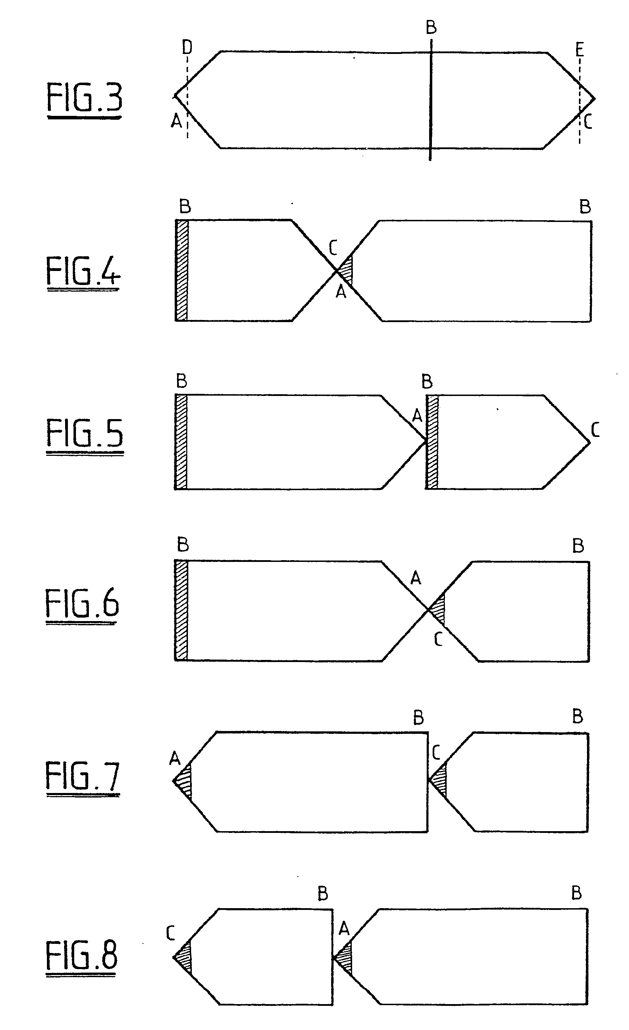

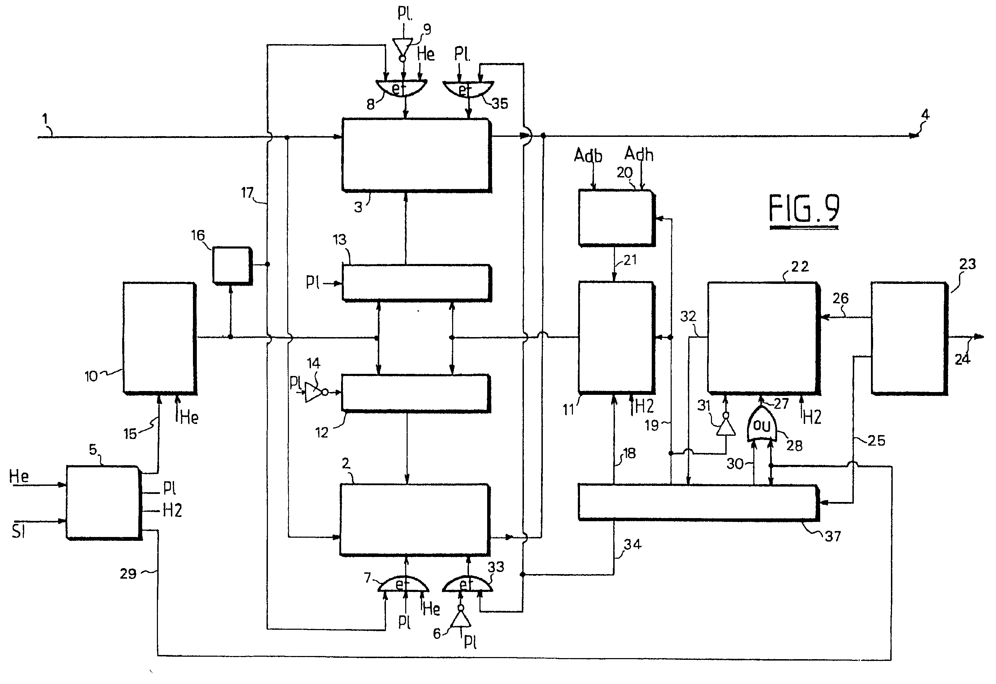

A la Fig. 3, on a représenté symboliquement la partie utile d'une ligne de télévision (signal composite ou signal MAC) ou d'une composante (luminance ou différence de couleur), commençant en un point A et se terminant en un point C.

Pour la commodité de l'exposé, le signal est représenté par un hexagone allongé, avec deux points convergeant respectivement vers les points A et C. La ligne B symbolise une coupure dont la position dans la ligne ou la composante est définie d'une manière pseudo-aléatoire.

Ainsi, la ligne B définit un premier segment AB et un second segment BC.

A la Fig. 4, on a représenté la ligne ou la composante embrouillée émise en utilisant une permutation des segments. On y reconnaît le segment BC devant le segment AB. Immédiatement derrière le premier point B, la zone hachurée représente la traînée de la première transition. Immédiatement après le point A, il existe une zone de traînée analogue, marquée par des hachures. Au désembrouillage, la zone hachurée qui suit le point A se retrouve entre le point A et la ligne D de la Fig. 3, c'est-à-dire dans une zone non visible par le téléspectateur, étant donné le surbalayage des téléviseurs. Par contre, la zone suivant le premier point B de la Fig. 4 se retrouve derrière la ligne B de la Fig. 3 et est donc visible. Pour masquer ce défaut, le segment AB de la Fig. 4 doit comprendre une petite partie de signal suivant la ligne B de la Fig. 3 (principe du recouvrement).

A la Fig. 5, on a représenté la ligne ou la composante embrouillée émise en utilisant le retournement sur place du premier segment qui est devenu BA. Derrière le premier point B, on a le même défaut qu'à la ligne Fig. 4. Derrière le second point B, on retrouve un défaut analogue, représenté par une zone hachurée. Il est évident qu'au désembrouillage, il faut prévoir un recouvrement important pour masquer le défaut.

A la Fig. 6, on a représenté la ligne ou la composante embrouillée émise en retournant le premier et le second segments sur place. On a toujours le même défaut derrière le premier point B, lequel peut être masqué par un recouvrement du même ordre que pour le cas de la Fig. 4. D'autre part, la zone hachurée derrière le point C se retrouve, au désembrouillage, derrière la ligne E de la Fig. 3, c'est-à-dire encore dans une zone non visible par le téléspectateur.

Il apparaît donc que l'utilisation de l'embrouillage des Figs. 4 à 6 conduit à prévoir un recouvrement au-delà du point B, c'est-à-dire une réduction de l'information utile, particulièrement sensible dans le cas de la Fig. 5.

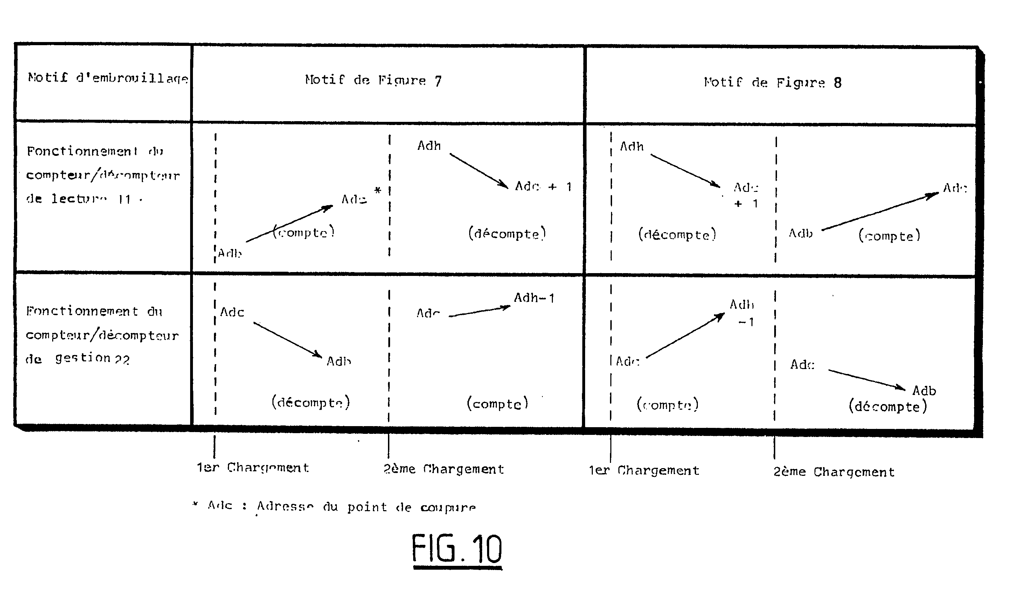

A la Fig. 7, on a représenté la ligne ou la composante embrouillée émise en utilisant le retournement sur place du second segment qui est devenu CB. Il y a une zone perturbée derrière le point C, laquelle se retrouve, au désembrouillage, derrière la ligne E de la Fig. 3, donc invisible. Il y a une zone perturbée derrière le point A qui, après désembrouillage, se trouve entre A et la ligne D et qui est donc également invisible. Il apparaît que le motif d'embrouillage de la Fig. 7 ne nécessite pas de recouvrement et est donc particulièrement intéressant.

A la Fig. 8, on a représenté la ligne ou la composante embrouillée émise en utilisant le retournement du second segment qui devient CB, puis le décalage circulaire du segment retourné CB par rapport au premier segment non retourné AB. Les zones perturbées respectivement derrière le point C et le point A se retrouvent, au désembrouillage, dans des parties invisibles du téléviseur. Donc, ce motif d'embrouillage ne nécessite pas non plus de recouvrement.

On dispose de deux motifs d'embrouillage montrés aux Figs. 7 et 8 qui respectent l'intégrité de l'information autour de la coupure. La longueur utile n'est donc pas plus réduite que dans la télévision classique où le surbalayage supprime toujours les bords latéraux de l'image.

La Fig. 9 donne un exemple de réalisation du dispositif d'embrouillage. Ce type de dispositif est capable d'embrouiller un signal composite, auquel cas il traite les lignes utiles comme une entité indivisible, avec un point de coupure défini à chaque ligne. Le dispositif peut également être utilisé pour embrouiller un signal MAC en composantes, auquel cas :

– soit la ligne vidéo MAC peut être considérée comme une entité indivisible et un seul point de coupure est défini à chaque ligne,

– soit chaque composante est embrouillée séparément et il est nécessaire de prévoir un dispositif par composante présente dans la ligne utile, c'est-à-dire deux dispositifs, avec deux points de coupure définis à chaque ligne : un dans le signal de différence de couleur et un dans le signal de luminance.

On suppose que le signal vidéo a été échantillonné et numérisé avant d'être introduit dans le dispositif et qu'il est accompagné de l'horloge He ayant servi à son échantillonnage, ainsi que d'une information de synchronisation d'image SI. L'information SI peut être extraite, d'une manière connue, d'un signal composite (PAL, SECAM ou NTSC) ou d'un signal MAC.

Le circuit de base de temps 5 engendre, par comptage à partir de He et SI, une information de parité ligne P1, un signal de commande de début d'écriture en mémoire et de chargement d'un compteur d'adresse d'écriture 10 délivrée sur la liaison 15 à chaque ligne utile, et un signal de commande de début de lecture mémoire et de chargement du compteur/décompteur de gestion 22 délivrée sur la liaison 29 à chaque ligne utile. D'autre part, il synthétise une horloge de lecture H2 à partir de He. L'horloge H2 est nécessaire lorsque le dispositif est utilisé pour embrouiller une composante de signal vidéo et qu'il effectue en même temps la compression temporelle (cas d'un signal MAC). Si le signal vidéo à embrouiller est codé sous forme composite, il n'est pas indispensable de synthétiser H2 car l'horloge de lecture est alors identique à l'horloge d'écriture He.

Le signal vidéo numérisé à embrouiller est appliqué au dispositif d'embrouillage par la liaison 1 qui comporte autant de fils que de bits par échantillon et qui est reliée, en parallèle, aux entrées de données de deux mémoires 2 et 3. Les sorties des mémoires 2 et 3 sont reliées à la liaison 4 de sortie du dispositif.

La sortie du compteur d'adresse d'écriture 10 est reliée, en parallèle, à l'entrée d'un circuit logique 16 et aux entrées de deux multiplexeurs 12 et 13. La sortie du circuit 16 est reliée aux deux premières entrées de deux portes ET 7 et 8. Les secondes entrées des portes 7 et 8 reçoivent respectivement l'information P1 directement et à travers un inverseur 9. Leurs troisièmes entrées reçoivent le signal d'horloge d'écriture He. Les sorties des portes 7 et 8 sont respectivement reliées aux entrées de validation d'écriture des mémoires 2 et 3.

Les entrées de validation de lecture des mémoires 2 et 3 sont respectivement reliées aux sorties de deux portes ET 33 et 35. Les premières entrées des portes 33 et 35 reçoivent respectivement l'information P1 à travers un inverseur 6 et directement. Leurs secondes entrées sont reliées, par une liaison 34, à une sortie d'un circuit 37. En pratique, les signaux de sortie des portes 33 et 35 fixent les états de sortie, soit "haute impédance", soit "données disponibles", des mémoires 2 et 3.

Ainsi, pour les lignes d'une parité, la mémoire 2 stocke les informations qui lui sont délivrées par la liaison 1 tandis que sa sortie prend l'état "haute impédance", alors que la mémoire 3 délivre à la liaison 4 les données qu'elle a enregistrées à la ligne précédente. Pour les lignes de l'autre parité, ces états sont inversés.

Le dispositif de la Fig. 9 comprend encore un compteur/décompteur d'adresse de lecture 11 dont la sortie est reliée en parallèle aux secondes entrées des multiplexeurs 12 et 13. Les entrées de commande des multiplexeurs 12 et 13 reçoivent respectivement l'information P1 par un inverseur 14 et directement.

Ainsi, pour les lignes d'une parité, le multiplexeur 12 transmet les adresses d'écriture délivrées par le compteur 10 à la mémoire 2 tandis que le multiplexeur 13 transmet les adresses de lecture délivrées par le compteur/décompteur 11 à la mémoire 13. Pour les lignes de l'autre parité, ces états sont inversés.

Le compteur d'adresse d'écriture 10 a son entrée d'horloge qui reçoit He et son entrée de chargement qui est reliée à la sortie 15 de la base de temps 5. A partir du moment où il est chargé, le compteur 10 compte d'une valeur de chargement Adb, ou adresse basse, jusqu'à une valeur de chargement Adh, ou adresse haute. Cette période correspond à la présence des données utiles en entrée des mémoires. Ayant atteint la valeur Adh, le compteur 10 se bloque jusqu'à l'ordre de chargement suivant. Le circuit logique 16 délivre une information d'autorisation d'écriture en mémoire pendant les périodes où le compteur 10 n'est pas bloqué, permettant par les portes 7 ou 8 de valider les entrées d'écriture des mémoires 2 ou 3 pendant ces mêmes périodes.

Le dispositif de la Fig. 9 comprend encore un circuit 23 qui a une double fonction. D'une part, il engendre les adresses des points de coupure et le type du motif d'embrouillage. Ces deux informations sont délivrées par un générateur pseudo-aléatoire qui est inclus dans le circuit 23. D'autre part, il engendre le mot d'initialisation du générateur pseudo-aléatoire et des données qui sont acheminées vers le récepteur par une liaison de sortie 24, ces données étant nécessaires au récepteur pour qu'il puisse retrouver la clé de désembrouillage. Ces données peuvent être acheminées au désembrouilleur par différents moyens : voie DIDON ou CEEFAX si le signal embrouillé est codé en composite, paquet particulier du multiplex numérique D2 ou C-MAC/paquets si le signal est codé en MAC.

Le circuit 23 délivre par 25 le type du motif d'embrouillage, soit le motif de la Fig. 7, soit celui de la Fig. 8, et par 26 l'adresse du point de coupure.

L'adresse du point de coupure est chargée, par la liaison 26, dans un compteur/décompteur de gestion 22, lequel a son entrée d'horloge reliée à la sortie H2 de la base de temps 5. Son entrée de commande déterminant son positionnement en état compteur ou en état décompteur est reliée à la sortie 19 du circuit logique 37, par l'intermédiaire d'un inverseur 31. Son entrée de commande de chargement est reliée à la sortie 27 d'une porte OU 28 dont la première entrée est reliée à la sortie 29 de la base de temps 5 et la seconde entrée à une sortie 30 du circuit logique 37. La sortie 32 du compteur/décompteur 22 est reliée à une entrée du circuit logique 37.

Le circuit logique 37, à partir des signaux appliqués à ses entrées 32, 29 et 25 délivre un signal de commande de chargement du compteur/décompteur de lecture 11 par l'intermédiaire d'une liaison 18, un signal de commande de chargement du compteur/décompteur de gestion 22 par l'intermédiaire de la liaison 30, une information caractéristique du motif d'embrouillage sélecté par l'intermédiaire de la liaison 19 et une information d'autorisation de lecture des mémoires par l'intermédiaire de la liaison 34.

La liaison 19 est reliée aux entrées de commande du compteur/décompteur 11 (positionnement en état "compteur" ou en état "décompteur") et d'un multiplexeur 20. La sortie du multiplexeur 20 est reliée, par une liaison 21, à l'entrée de chargement du compteur/décompteur, la valeur du chargement pouvant être choisie entre deux valeurs possibles Adb ou Adh. Le compteur/décompteur de lecture 11 a son entrée d'horloge H2 reliée à la base de temps 5, et son entrée de commande de chargement est reliée à la sortie 18 du circuit logique 37.

Le fonctionnement des circuits 22, 37, 11 et 20 sera mieux compris en se référant au tableau de la Fig. 10. Le compteur/décompteur de lecture 11 fournit aux mémoires 2 et 3 des adresses de lecture qui varient entre Adb et Adh. Pour réaliser les motifs d'embrouillage des Figs. 7 et 8, le compteur/décompteur de lecture 11 balaie l'ensemble des adresses comme indiqué à la Fig. 10. Il est chargé deux fois par ligne, une fois avec l'adresse Adb, une fois avec l'adresse Adh. L'ordre dans lequel sont chargées ces valeurs dépend du motif d'embrouillage. L'instant de chargement de la première valeur est fixe dans le temps ; en revanche, l'instant de chargement de la seconde valeur dépend du choix du point de coupure. La détection d'un état variable au cours du temps (adresse du point de coupure) est une opération relativement lourde à mettre en oeuvre. C'est pourquoi on utilise le compteur/décompteur de gestion 22 pour déterminer cet instant de second chargement. Le compteur/décompteur 22 balaie l'ensemble des adresses comme indiqué à la Fig. 10. La détermina

tion de l'instant du second chargement est réalisée par détection, soit de l'adresse Adb, soit de l'adresse Adh-1, selon le motif d'embrouillage choisi.

C'est le circuit logique 37 qui effectue cette opération de détection d'adresse et en déduit les commandes de chargement des compteur/décompteurs : à partir de l'état du compteur/décompteur de gestion 22 qui lui est fourni par la liaison 32 et du type de motif d'embrouillage qui lui est fourni par la liaison 25, il détermine le moment du second chargement des compteur/décompteurs 11 et 22. Un ordre de second chargement est envoyé au compteur/décompteur de gestion 22 par la liaison 30, l'ordre de premier chargement étant délivré par l'intermédiaire de la liaison 29 et provenant du circuit base de temps 5. A partir de l'ordre de premier chargement qui lui parvient par la liaison 29 et de la détermination du moment de second chargement, le circuit logique 37 délivre une commande de chargement du compteur/décompteur de lecture 11 par l'intermédiaire de la liaison 18. D'autre part, compte tenu du motif d'embrouillage choisi et conformément à la Fig. 10, le circuit logique 37 détermine, à chaque instant, quel doit être l'état, "compteur" ou "décompteur", de chacun des circuits 11 et 22. Cette information est présente sur la liaison 19. Enfin, le circuit logique 37 détermine des créneaux d'autorisation de lecture des mémoires à partir de l'état du compteur/décompteur de gestion 22. Cette information est délivrée par l'intermédiaire de la liaison 34.

Les adresses chargées dans le compteur/décompteur de lecture 11 (Adb ou Adh) sont envoyées par le multiplexeur 20 commandé par le circuit logique 37 par l'intermédiaire de la liaison 19 qui sert par ailleurs à déterminer le positionnement en état compteur ou décompteur de 11. Cela s'explique par le fait qu'un chargement à l'adresse basse Adb s'accompagne logiquement du positionnement de 11 en état compteur et que le chargement à l'adresse haute Adh s'accompagne du positionnement de 11 en état décompteur.

On va maintenant décrire le fonctionnement du dispositif de la Fig. 9. On supposera que, pendant les lignes paires, les échantillons vidéo sont écrits dans la mémoire 2. La sortie de la mémoire 2 est alors en état "haute impédance" et le multiplexeur 12 délivre à la mémoire 2 les adresses d'écriture en provenance du compteur 10. Les échantillons vidéo sont enregistrés dans leur ordre d'arrivée. L'opération d'écriture débute au moment de l'ordre de chargement du compteur d'écriture 10 et s'achève lorsque celui-ci se bloque.

Pendant le même temps, la mémoire 3 présente en sortie les échantillons qui y ont été enregistrés lors de la ligne précédente. Le multiplexeur 13 délivre à la mémoire 3 les adresses de lecture en provenance du compteur/décompteur 11. Ces adresses de lecture évoluent conformément à la Fig. 10 de telle sorte que l'opération physique d'embrouillage est réalisée à la lecture des données. L'opération de lecture débute au moment du premier ordre de chargement des compteurs/décompteurs 11 et 22 fourni par le circuit 5 par l'intermédiaire de la liaison 29. La mémoire précédemment en état "haute impédance" est mise en état "données disponibles". L'opération s'arrête lorsque l'ensemble des valeurs d'adresse a été balayé. A ce moment, la mémoire 3 est remise en état "haute impédance".

Il est bien évident que l'on pourrait concevoir un dispositif semblable à celui de la Fig. 9, mais dans lequel l'opération physique d'embrouillage serait faite à l'écriture.

Pendant les lignes impaires, les rôles des deux mémoires sont inversés.

A la réception, le dispositif de désembrouillage serait tout à fait analogue au dispositif décrit à la Fig. 9 et basé sur les mêmes principes.

## Revendications

1. Procédé d'embrouillage et de désembrouillage du signal utile d'une ligne de signal vidéo échantillonné, dans lequel au moins une partie dudit signal utile est découpée en deux segments adjacents (AB, BC), chacun d'entre eux comportant au moins deux échantillons, le point de coupure (B) entre les deux segments étant définis d'une manière pseudo-aléatoire synchrone à l'émission et à la réception, et dans lequel à l'émission, à chaque ligne et de façon pseudo-aléatoire, un motif d'embrouillage parmi des motifs possibles, est choisi, caractérisé en ce que deux motifs sont possibles, un parmi ces deux motifs particuliers, c'est-à-dire retournement sur place du second segment (Fig.7) ou retournement du second segment suivi de la permutation avec le premier segment (Fig. 8), étant choisi, et en ce qu'à la réception, le traitement inverse de celui de l'émission est appliqué de façon à rendre son intelligibilité au signal vidéo, c'est-à-dire respectivement retournement sur place du second segment reçu ou retournement du premier segment reçu suivi de la permutation avec le second segment reçu.

2. Procédé suivant la revendication 1, portant sur un signal MAC, caractérisé en ce que l'embrouillage porte sur la composante de luminance, d'une part, et sur la composante de différence de couleur, d'autre part, les points de coupure de la composante de luminance et de la composante de différence de couleur étant homothétiques.

3. Procédé suivant la revendication 1, portant sur un signal MAC, caractérisé en ce que l'embrouillage porte sur la composante de luminance, d'une part, et sur la composante de différence de couleur, d'autre part, les points de coupure de la composante de luminance et de la composante de différence de couleur étant non homothétiques.

4. Procédé suivant la revendication 1, portant sur un signal MAC, caractérisé en ce que l'embrouillage porte sur l'ensemble de la ligne vidéo considérée comme indissociable en ses composantes.

## Ansprüche

1. Verfahren zum Verschleiern und Entschleiern eines Nutzsignales einer Zeile eines abgetasteten Videosignals, wobei zumindest ein Bereich des besagten Signals in zwei benachbarte Teile (AB, BC) zerlegt wird und jedes Teil aus wenigstens zwei Motiven besteht und wobei der Schnittpunkt (B) zwischen den beiden Teilen in pseudozufälliger Weise sende- und empfangsseitig festgelegt wird, wobei sendeseitig bei jeder Zeile und in pseudozufälliger Weise ein Verschleierungsmotiv aus möglichen Motiven gewählt wird, dadurch gekennzeichnet, daß eine Umdrehung des zweiten Teils an Ort und Stelle stattfindet (Fig.7) oder daß das zweite Teil umgedreht und mit dem ersten ausgewählten Teil permutiert wird (Fig.8), und daß empfangsseitig die umgekehrte Vorgehensweise wie sendeseitig angewendet wird, um die Sichtbarkeit des Videosignals wiederherzustellen, das heißt, daß eine Umdrehung des zweiten empfangenen Teils an Ort und Stelle stattfindet oder daß das erste empfangene Teil umgedreht und mit dem zweiten empfangenen Teil permutiert wird.

2. Verfahren nach Anspruch 1, angewandt auf ein MAC-Signal, dadurch gekennzeichnet, daß die Verschleierung einerseits auf die Lumineszenzkomponente und andererseits auf die Farb-Differenzkomponente angewendet wird, wobei die Schnittpunkte der Lumineszenzkomponente und der Farb-Differenzkomponente homothetisch sind.

3. Verfahren nach Anspruch 1, angewandt auf ein MAC-Signal, dadurch gekennzeichnet, daß die Verschleierung einerseits auf die Lumineszenzkomponente und andererseits auf die Farbdifferenzkomponente angewendet wird, wobei die Schnittpunkte der Lumineszenzkomponente und der Farbdifferenzkomponente nicht homothetisch sind.

4. Verfahren nach Anspruch 1, angewandt auf ein MAC-Signal, dadurch gekennzeichnet, daß die Verschleierung auf die gesamte, als nicht zerlegbar betrachtete Video-Zeile angewendet wird.

## Claims

1. A method of jumbling and unjumbling of the useful signal of a line of sampled video signal in which at least one part of the said signal is cut into two adjacent segments (AB, BC) each of them comprising at least two samples, the cut-off point (B) between the two segments being defined in a synchronous pseudo-aleatory manner on emission and on reception and in which the emission at each line and in pseudo-aleatory manner a jumbling motif among possible motifs is chosen, characterised in that two motifs are possible, one among these two particular motifs, that is to say, turning on the spot of the second segment (Fig. 7) or turning of the second segment followed by the permutation with the first segment (Fig. 8) being chosen and in that on reception the reverse treatment of that of the emission is applied so as to restore its intelligibility to the video signal, that is to say, respectively turning on the spot of the second segment received or turning of the first segment received followed by the permutation with the second segment received.

2. A method according to claim 1, bearing on a MAC signal, characterised in that the jumbling bears on the luminance component, on the one hand, and on the difference in colour component on the other hand, the cut-off points of the luminance component and of the difference in colour component being homothetic.

3. A method according to claim 1, bearing on a MAC signal, characterised in that the jumbling bears on the luminance component on the one hand, and on the difference in colour component on the other hand, the cut-off points of the luminance component and of the difference in colour component being non-homothetic.

4. A method according to claim 1, bearing on a MAC signal, characterised in that the jumbling bears on the whole of the video line considered as indissociable in its components.

EP 0 211 791 B1

8

FIG.1

FIG.2

FIG.3

FIG.4

FIG.5

FIG.6

FIG.7

FIG.8

FIG.9

| Motif d'embrouillage | Motif de Figure 7 | | Motif de Figure 8 | |
|---|---|---|---|---|
| Fonctionnement du compteur/décompteur de lecture 11 · | Adb → Adc * (compte) | Adh → Adc + 1 (décompte) | Adh → Adc + 1 (décompte) | Adb → Adc (compte) |
| Fonctionnement du compteur/décompteur de gestion 22 | Adc → Adb (décompte) | Adc → Adh-1 (compte) | Adc → Adh -1 (compte) | Adc → Adb (décompte) |
| | 1er Chargement | 2ème Chargement | 1er Chargement | 2ème Chargement |

\* Adc : Adresse du point de coupure

# FIG. 10

EP 0 211 791 B1